# EUROPEAN PATENT APPLICATION

(11) **EP 3 147 561 A1**
(43) Date of publication of application: **29.03.2017**
(21) Application number: 16160111.7
(22) Date of filing: 14.03.2016
(51) Int. Cl.: F21V 8/00

(54) **LIGHT GUIDE PANELS FOR USE OUTDOOR AND IN WET AREAS**

(71) Applicant: Evonik Röhm GmbH, 64293 Darmstadt (DE)
(72) Inventor: Groothues, Herbert, 60528 Frankfurt (DE)

(57) **Abstract**

The present invention relates to light guide plates having an improved resistance to humidity and dust. The light guide plates can be advantageously employed in outdoor devices, vehicles as well as in humid and wet areas, for instance as a light source in traffic signs, street lights, advertising panels and illumination means.

## Description

### Field of the invention

The present invention relates to light guide plates having an improved resistance to humidity and dust. The light guide plates can be advantageously employed in outdoor devices, vehicles as well as in humid and wet areas, for instance as a light source in traffic signs, street lights, advertising panels and illumination means.

### Background of the invention

In the recent decades, liquid crystal displays (LCDs) have come into widespread use. An LCD displays an image by controlling the transmittance of light incident on a liquid crystal panel. Therefore, the liquid crystal panel is generally provided with a backlight unit which emits light to be incident on the liquid crystal panel. Typically, the backlight unit comprises a light guide plate and one or several light sources which are arranged on at least one edge of the light guide plate.

The light emitted by the light source enters the light guide plate. On at least one surface of the light guide plate there is usually a structure which scatters the light. When a light beam is incident on said structure, it is scattered at an angle smaller than the angle of total reflection of the transparent sheet of the light guide plate material, and is thus emitted from the light guide plate.

Since the light can, in principle, be emitted from both sides of the transparent sheet, on one side there is therefore typically a white reflector film. With this arrangement, the light is emitted only on one backlight unit side. To ensure a substantially uniform light emission across the surfaces of the light guide, the density of the light-emitting structures generally increases with increasing distance from the light sources.

JP 10-21720 A describes a backlight device in which a transparent sheet and a reflective panel are bonded together using an adhesive containing a light-scattering material. The adhesive layer is formed in a dot pattern between the transparent sheet and the reflective panel. To achieve a more uniform illumination over the entire surface of the backlight device JP 10-21720 A suggests applying an increasing amount of the adhesive layer containing the light-scattering material with the increasing distance from the light sources.

JP 6-76935 U discloses a backlight device having a light guide panel eliminated by at least one light source arranged on at least one of its edges and a reflective panel arranged on the back surface of the light guide panel. Between the light guide panel and the reflective panel a light transitive layer is provided in form of a dot pattern. The dot pattern, for instance a plurality of round dots, is formed in such a way that the area of the backside covered with the dots increases with an increasing distance from the light source.

US 6,447,135 teaches a light guide comprising an optically transmissive monolith having an input edge, a back surface and an output surface. The reflector is secured to the back surface by a patterned layer of adhesive. The patterned layer of adhesive is arranged to extract light from the light guide.

WO 2015/010871 A1 discloses a light guide plate composed of a colourless transparent sheet and an opaque white or translucent white thermoplastic reflector film. The optical connection between the colourless transparent sheet and the reflector film is provided by a colourless thermoplastic applied by structured printing and having a glass transition temperature of about 25°C and below the glass transition temperature of the material of the colourless transparent sheet and of the thermoplastic of the reflector film. Alternatively, a reactive adhesive with an activation temperature between 25°C and the glass transition temperature of the material of the colourless transparent sheet and of the thermoplastic of the reflector sheet is employed.

In summary, the light guide plates of the prior art typically employ a dot pattern or a pattern of quadratic areas of a scattering material located between the transparent sheet and the reflector film. The remaining space between the transparent sheet and the reflector film is usually filled with air. Since the areas covered by the individual scattering material dots are spaced apart from each other and do not form any closed cavities, the air can substantially freely move between the surfaces of the transparent sheet and the reflector film. Therefore, if an edge of a light guide plate of the prior art comes in contact with a liquid such as water, the liquid can easily fill the space between the surfaces of the transparent sheet and the reflector film and is distributed by capillary forces over a large area within the light guide plate. Similarly to the scattering material, the liquid captured between the surfaces of the transparent sheet and the reflector film can create an optical contact between them and lead to an undesired light scattering. As a consequence, an undesirably high amount of light is emitted from the areas where the liquid has been captured.

Additionally, when a device comprising a light guide plate of the prior art is exposed to temperature changes, for instance is brought from a colder environment to a warm and humid room, condensation of atmospheric humidity may take place between the transparent sheet and the reflector film. Also small solid particles such as dust may enter the space between the transparent sheet and the reflector film and lead to an undesired light scattering.

To overcome the above problems of the prior art the edges of light guide plates could, in principle, be additionally sealed using a water-resistant sealant. However, such sealing step would unnecessarily increase the manufacturing costs of the light guide plate and, once the sealing of the light guide plate edges is worn out or damaged, which may easily happen if the light guide plate is used in a vehicle or in an outdoor device, the atmospheric humidity and dust particles will easily enter the space between the transparent sheet and the reflector film and affect the function of the light guide plate. Under unfavourable conditions, the humidity could even spread through capillary forces over the entire surface of the light guide plate and render it unusable.

### Object of the present invention

In light of the above described drawbacks of the light guide plates of the prior art, it was an object of the present invention to provide a novel light guide plate with an improved resistance to humidity and dust. Such light guide plate would be suitable for use outdoor and in humid and wet areas.

A further object of the present invention was to provide an easy and cost-efficient process for the manufacturing the humidity and dust resistant light guide plates.

Yet a further object of the invention was to provide a surface lighting device comprising the humidity and dust resistant light guide plate for use as a light source in LCD screens, backlighting in traffic signs, street lights, advertising panels, illumination means and in inferior or exterior vehicle lighting.

### Summary of the invention

The present invention is based on a surprising finding that the humidity and dust resistance of light guide plates of the prior art is significantly improved when the adhesive layer located between the transparent sheet and the reflector film is applied in form of a pattern comprising a plurality of closed cavities.

Accordingly, in one aspect of the present invention, a light guide plate is provided, which comprises a substantially opaque reflector film, an adhesive layer, which comprises an adhesive material, and a transparent sheet, wherein the transparent sheet and the reflector film are bonded together by the adhesive layer which is located between the transparent sheet and the reflector film and the adhesive layer provides an optical connection between the transparent sheet and the reflector film, wherein the light guide is characterised in that
the adhesive layer forms a pattern comprising a plurality of closed cavities.

In another aspect of the present invention, a process for the production of light guide plates having improved humidity and dust resistance is provided. The process of the invention comprises the following steps (a)-(c):
(a) the transparent sheet is produced by extrusion with a polishing stack from a transparent material;
(b) the adhesive material is applied to the reflector film by structural printing; and
(c) the reflector film is laminated onto the transparent sheet, wherein a laminated sheet is obtained.

In yet a further embodiment of the present invention a surface lighting device comprising the humidity and dust resistant light guide plate is provided. Said light lighting device is particularly suitable for use as a light source in applications such as backlighting in LCD screens, backlighting in traffic signs, street lights, advertising panels, illumination means or in interior or exterior vehicle lighting.

### Brief description of the drawings

Figure 1 is a schematic illustration of an example of a light guide plate of the present invention in combination with two light sources.
   - 1.: transparent sheet
   - 2.: reflector film
   - 3.: adhesive layer
   - 4.: light sources
   - 5.: a closed cavity
Figures 2a-2f illustrate examples of patterns formed by the adhesive material which can be used in the light guide plates of the present invention. In these examples the adhesive material forms two groups of parallel lines.

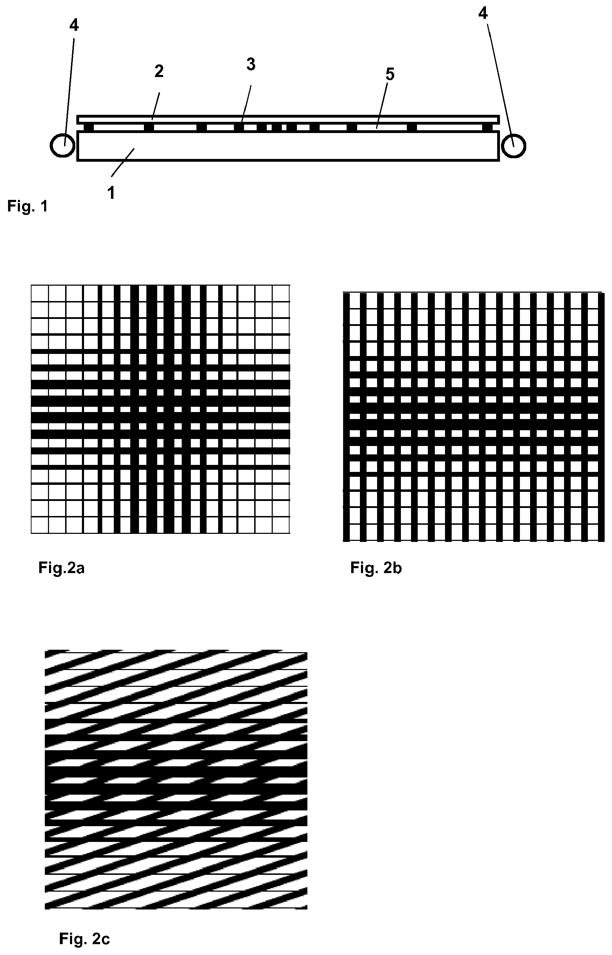

Figure 2a: the parallel lines of both groups are spaced apart at equal distances and intersect at right angles. The thickness of the parallel lines of both groups increases gradually with the increasing distances from the light guide plate edges.
Figure 2b: the parallel lines of both groups are spaced apart at equal distances and intersect at right angles. The thickness of the parallel lines of one group increases gradually with the increasing distances from two opposed light guide plate edges (bottom and top edges). The lines of the other group have a substantially uniform thickness.
Figure 2c: the parallel lines of both groups are spaced apart at equal distances and intersect at non-right angles. The thickness of the parallel lines of one group increases gradually with the increasing distances from two opposed light guide plate edges (bottom and top edges). The lines of the other group have a substantially uniform thickness.

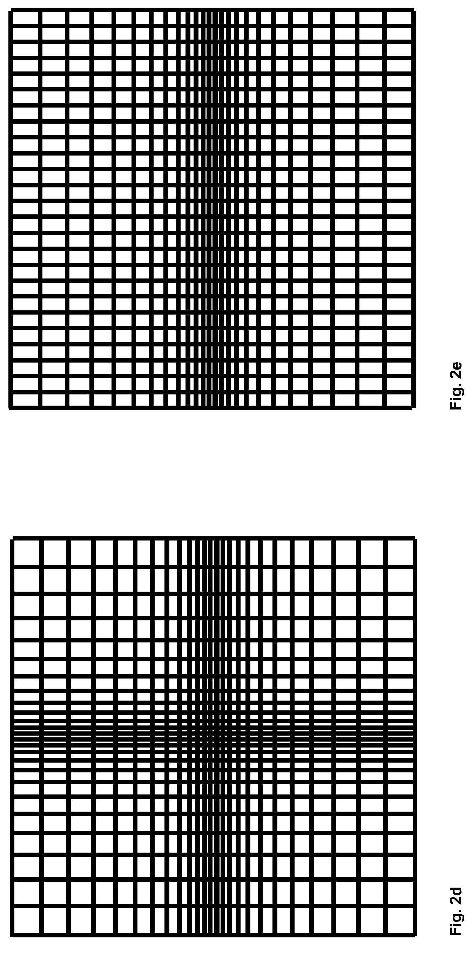

Figure 2d: the parallel lines of both groups intersect at right angles and have a substantially uniform thickness. The spacing between the parallel lines of both groups decreases gradually with the increasing distances from the light guide plate edges.
Figure 2e: the parallel lines of both groups intersect at right angles and have a substantially uniform thickness. The spacing between the parallel lines of one group decreases gradually with the increasing distances from the light guide plate edges (bottom and top edges). The spacing between the lines of the other group is substantially uniform.

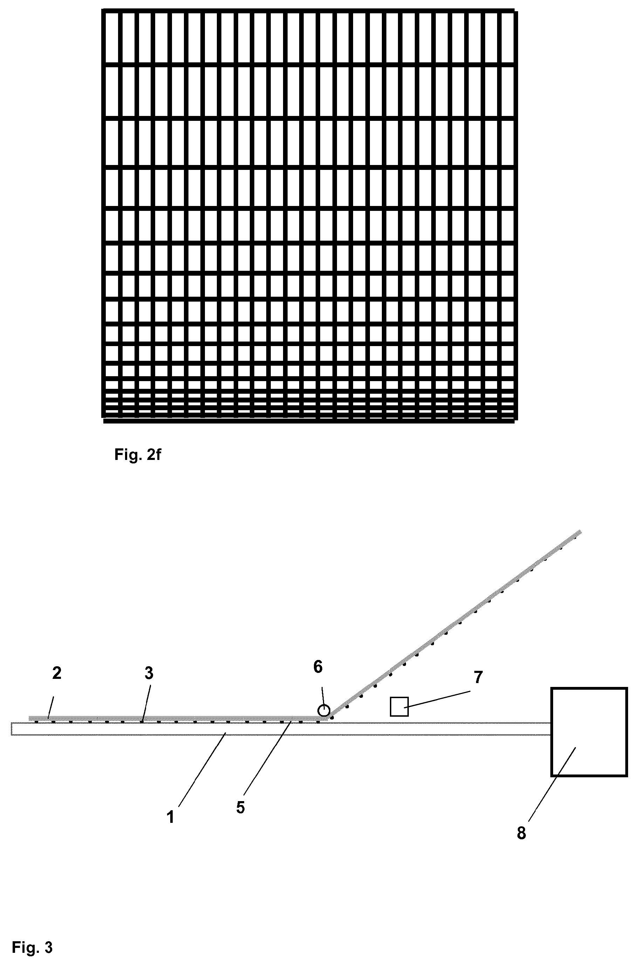

Figure 2f: the parallel lines of both groups intersect at right angles and have a substantially uniform thickness. The spacing between the parallel lines of one group decreases gradually with the increasing distances from one light guide plate edge (top edge). The spacing between the lines of the other group is substantially uniform.
Figure 3 is a schematic representation of an example of the method of the present invention.
   - 1.: transparent sheet from polishing stack
   - 2.: reflector film
   - 3.: adhesive layer applied by printing
   - 5.: closed cavities
   - 6.: pressure roll
   - 7.: heating device *e.g*. a radiant heater, IR source or a blower
   - 8.: extruder with polishing stack

### Detailed description of preferred embodiments

The expressions light guide plate refers to a device composed of a transparent sheet, a reflector film and, situated between these, an adhesive material. The term "*light guide plate*" is not to be confused with the term "*transparent sheet*", the later defines exclusively the first component of the light guide plate. The transparent sheet can be produced by way of example by extrusion. Alternatively, the transparent sheet can also be produced by way of a continuous casting process (continuous cast).

The wording *"optical connection"* below refers to a bonding or physical adhesion between two layers or interfaces. The wording "optical connection" expressly excludes any simple superposition of one layer, in particular of the reflector film, on another layer, in particular the colourless, transparent sheet. A particular feature of the light guide plate of the invention is that there is no direct optical connection between the transparent sheet 1 and the reflector film 2.

An example of the light guide plate of the present invention is illustrated by Figure 1, where, for the sake of clarity only, the light sources 4 are shown. However, the light sources 4 do not constitute a part of the light guide plate.

Preferably, the transparent sheet 1 and the reflector film 2 are substantially parallel to each other i.e. the deviations of the distance between the inner surface of the transparent sheet 1 and the inner surface of the reflector film 2 are below 10%, preferably below 5%, more preferably below 3%.

In this embodiment, the shape of the transparent sheet 1 and the reflector film 2 is not particularly limited, as long as the inner surface of the transparent sheet 1 and the inner surface of the reflector film 2 are substantially parallel to each other. For instance, the transparent sheet 1 and the reflector film 2 may be substantially flat i.e. planar. Depending on the intended application of the light guide plate, the transparent sheet 1 and the reflector film 2 may also form curved parallel surfaces e.g. matching spherical surfaces, matching parabolic surfaces etc. The transparent sheet 1 and the reflector film 2 may also form layers of a more complex geometrical object as long as both layers are substantially parallel to each other.

Preferably, there is no direct contact between the transparent sheet 1 and the reflector film 2 i.e. the surface of the transparent sheet 1 is physically separated from the surface of the reflector film 2 by at least one material different from the material of the transparent sheet 1 and the material of the reflector film 2. However, the transparent sheet 1 and the reflector film 2 are bonded to each other by the adhesive layer 3 which provides an optical connection between them.

According to the present invention, the adhesive layer 3 forms a pattern comprising a plurality of closed cavities. The closed cavities are discrete i.e. are not connected to each other. The closed cavities fill the entire space between the transparent sheet 1 and the reflector film 2. As a consequence, if an edge of the light guide plate comes in contact with a liquid such as water, the liquid cannot enter the space between the surfaces of the transparent sheet and the reflector film. The shape of the closed cavities is not particularly limited and, depending on the pattern of the adhesive layer 3 may be cubical, spherical or irregular.

The closed cavities in the adhesive layer are typically filled with a gas. For instance, the gas in the closed cavities may be air, nitrogen, carbon dioxide, argon, or a mixture thereof. The gas pressure in the closed cavities is preferably about 1 atm.

In a particularly preferred embodiment, the inner surface of the transparent sheet 1 defines a plurality of lower surface of the closed cavities and the inner surface of the reflector film 2 defines a plurality of upper surface of the closed cavities. The adhesive material 3 separating the closed cavities from each other thereby defines the lateral surfaces of the closed cavities.

As used herein, the term "*substantially opaque reflector film*" may refer to an opaque reflector film or to a translucent reflector film. Opaque materials are those that transmit from 0 to 10% of the light and correspondingly reflect a large proportion of the light. Materials defined as translucent are those that provide diffuse transmission of from 10 to 70% of the light.

The choice of the adhesive material for use in the present invention is not particularly limited as long as it has a sufficiently low visible light absorbance and a suitable refractive index. Preferably, the adhesive material is substantially colourless. In one embodiment, the adhesive material is a thermoplastic material having a glass transition temperature above 25°C and below the glass transition temperatures of the material of the transparent sheet and of the reflector film. Alternatively, the adhesive material may be a reactive adhesive with an activation temperature between 25°C and the glass transition temperature of the material of the transparent sheet and the material of the reflector film. The corresponding materials are described inter *alia in* WO 2015/010871 A1.

Preferably, the adhesive material is substantially air-impermeable, water-impermeable and resistant against water and humidity. Thus, when the light guide plate is exposed to a humid or wet environment, the adhesive material effectively prevents penetration of humidity and dust into the space between the transparent sheet 1 and the reflector film 2.

In one embodiment, the thermoplastic material which may be applied by printing and which in the finished light guide plate assumes the function of interruptive sites for the refraction and emission of the light on the visible side of the light guide plate can be based on any thermoplastic material which has a glass transition temperature above 25°C and below the softening points of the reflector film and of the transparent sheet; the temperatures involved here can be glass transition temperatures or melting points.

If a thermally activated reactive adhesive (reactive hot-melt) is used as an adhesive material, the thermal activation must likewise occur above 25°C and below the melting point of film and light guide plate. Another factor that must be considered by the person skilled in the art during selection is that the thermoplastic or reactive adhesive is not restricted by the respective printing process. The refractive index of the reactive adhesive or adhesive layer can in principle be smaller than, the same as or greater than the refractive index of the transparent sheet. However, it is preferable that the refractive index is the same as or greater than the refractive index of the material of the transparent sheet, since the efficiency of light emission is thus increased.

The adhesive layer can additionally comprise scattering particles. The scattering particles influence the light scattering in the adhesive layer, and the person skilled in the art can therefore easily obtain maximum uniformity of light emission by balancing the following parameters: size of the interruptive sites, distribution of the interruptive sites, refractive index of the thermoplastic of the interruptive sites as a ratio to the refractive index of the material of the transparent sheet, composition of the reflector film and finally nature, size and amount of optional scattering particles.

The scattering particles can comprise organic or inorganic scattering particles or a combination thereof. The decisive factor is that the size and the refractive index of the particles are such that visible light is scattered. Organic particles can by way of example comprise PMMA suspension polymers. Inorganic scattering particles generally comprise particles made of titanium dioxide, silicon dioxide or barium sulphate. The person skilled in the art is aware of all of these scattering particles and can easily select therefrom.

Preferably, the adhesive material forms two or more groups of parallel lines forming the lateral surfaces of the closed cavities Said groups of parallel lines may intersect at right angles, or at non-right angles. Preferably, the pattern forming a plurality of closed cavities comprises two groups of parallel lines intersecting at right angles. Examples of such patterns formed by the adhesive layer is shown in Figures 2a-2f.

The sizes of the adhesive layer structures in the two dimensions parallel to the light guide plate correspond to the sizes that are known to the person skilled in the art in systems of this type. The thickness of the structures between the transparent sheet and the reflector film, and therefore the size of the structures in the third dimension that is perpendicular to the transparent sheet, is typically from 0.5 to 200 um, preferably from 1 to 100 um, more preferably from 1 to 30 um. This thickness ideally therefore also corresponds to the distance of the reflector film from the transparent sheet in the light guide plate.

The transparent sheet in the light guide plate of the invention may be composed of polycarbonate, of a cycloolefin copolymer, of polystyrene, of PMMA or of a copolymer of MMA and styrene. It is particularly preferable that the transparent sheet is composed of PMMA or of a copolymer of MMA and styrene, and it is even more preferable that it is composed of PMMA. According to the invention, the expression PMMA does not necessarily mean that the material comprises simply a polymer of MMA. Many commercially obtainable PMMAs, often termed acrylic sheet, comprise a certain proportion of comonomers, *e.g.* alkyl acrylates, in order *inter alia* to improve thermal stability.

Alternatively, the transparent sheet may be composed of a blend which comprises at least 50% by weight of PMMA, based on the total weight of the transparent sheet material. A factor which requires attention here during the selection of the other blend constituents and which can easily be determined by the person skilled in the art is that the compatibility of these with the PMMA is such as not to disrupt transparency.

The thickness of the transparent sheet is preferably from 0.25 mm to 25 mm, preferably from 1 mm to 10 mm and particularly preferably from 1.5 mm to 4 mm. An example of the PMMA preferably used is the PMMA obtainable commercially with trade mark PLEXIGLAS® from Evonik Röhm GmbH.

The reflector film can be composed of almost any desired thermoplastic material. By way of example, the film may be composed of poly(meth)acrylate (PMMA). In this context, poly(meth)acrylate means homo- or copolymers of methacrylates and/or of acrylates. Alternatively the reflector film used according to the invention may be composed of a polyester. It is particularly preferable that the reflector film is made of polyethylene terephthalate (PET) or, alternatively, comprises a PET film. The thickness of the reflector film is preferably from 25 to 500 µm and particularly preferably from 50 µm to 200 µm. In another, likewise particularly preferred, embodiment the reflector film comprises a three-layer film with a middle layer made of semicrystalline polypropylene (PP) comprising particles and with two exterior layers made of cycloolefin copolymers. In this case, the particles in particular comprise TiO₂, BaSO₄ or CaCO₃. Three-layer films of this type are marketed by way of example by Mitsubishi Plastics as Lumirex II M20 or L20.

The reflector film is typically a white opaque film or at least a translucent white film. Embodiments using a transparent film, which in this case would actually merely be a protective film, are not according to the invention, since systems of that type would lack the advantage that no additional layer is incorporated for reflection. A consequence of a translucent film is that a certain proportion of the emitted light is also emitted at that side of the panel that comprises the said film. It is thus possible to produce light guide plates which by way of example in addition to direct illumination also, in accordance with the light transmittance of the film, emit a defined quantity of light in the opposite direction, in order by way of example to provide indirect illumination by way of the ceiling. The white colouring of the reflector film can be achieved by adding fillers known to the person skilled in the art, independently of the extent of the colouring relating to an opaque or translucent system. Examples of these fillers are TiO₂, silicon dioxide and barium sulphate. Commercially obtainable examples of white-coloured reflector films made of PET are Melinex 339 from Dupont Tejin and Hostaphan WO50 from Mitsubishi Rayon.

A further aspect of the present invention is a process for the production of light guide plates comprising the following steps (a)-(c):
(a) the transparent sheet is produced by extrusion with a polishing stack from a transparent material;
(b) the adhesive material is applied to the reflector film by structural printing; and
(c) the reflector film is laminated onto the transparent sheet, wherein a laminated sheet is obtained.

An example of the process of the present invention is illustrated by Figure 3.

When the adhesive material is a thermoplastic material having a glass transition temperature above 25°C and below the glass transition temperatures of the material of the transparent sheet and of the material of the reflector film as described above, it is preferred that directly prior to the step (c) the surface of the transparent sheet is heated to a temperature above the glass transition temperature of the adhesive material. The heating can be accomplished e.g. by means of a radiant heater, of an IR source or of a blower. Subsequently, the laminated sheet obtained in the step (c) can be sawn into pieces, cut or is wound onto a roll. If the material is rolled up onto a roll, the dimensioning of the roll must be such that the finished light guide plate is not subjected to any excessively large mechanical stress during roll-up.

In this embodiment, the location of the adhesive material after the lamination process is between the sheet and the reflector film, so that an optical connection between sheet and reflector film is provided, and that there is no direct optical connection between the transparent sheet and the reflector film. The glass transition temperature of the printed thermoplastic is above 25°C and below the glass transition temperatures of the colourless transparent material of the sheet and of the thermoplastic of the reflector film. In order to permit an exact positioning of the saw used for cutting-to-size, it is also possible to print the adhesive material differently coloured positional markings preferably on the reverse side of the reflector film, in addition to the white or colourless emission structures.

The above process can be carried out with markedly more efficiency in terms of time and cost than processes of the prior art, and additionally provides protection for the printed adhesive material. This is achieved in that the adhesive material providing the optical interruptive sites is first printed onto the reflector film. The reflector film with the printed pattern of the adhesive material is then laminated over the entire area onto the sheet in such a way that the location of the optical interruptive sites, which take the form of a spacer, is between the transparent sheet and the reflector film. The print of the adhesive material onto the reflector film is preferably achieved by means of a conventional film-printing process. In particular, the print effect may be applied by using a low-cost mass-production printing process such as intaglio roll printing. The printing can take place off-line in a separate process, e.g. as integral constituent of the film-extrusion process. Alternatively, however, it is also possible that the printing of the adhesive material onto the reflector film takes place on-line, prior to the lamination onto the transparent sheet.

In an alternative to the extrusion process that is described and preferred, the transparent sheet may be produced by means of a (continuous) casting process, and initially take the form of a continuous web of polymer.

Preferably, the bonding to the printed film takes place only after the polishing stack. There is generally no need for any adhesive or adhesion promoter during the lamination process, since the temperature of the surface of the transparent sheet and/or of the printed reflector film during the lamination process is above the glass transition temperature or melting point of the printed thermoplastic of the interruptive sites, the said temperature being as far as possible below the glass transition temperatures or melting points of the transparent sheet and of the reflector film.

During the lamination process, i.e. directly after the printed reflector film has been superposed onto the transparent sheet with the print effect between the said two layers, the said layers are passed through rolls in such a way that the printed thermoplastic adheres on the transparent sheet. Temperature, Shore hardness of the roll, which is preferably made of rubber, and roll pressure must be selected in such a way that no lasting direct optical connection occurs between the unprinted sites of the reflector film and the transparent sheet. It is preferable here that the reflector-film side faces towards the carrier roll, which in particular comprises a rubber roll.

There are two equally preferred embodiments in relation to the lamination process. In the first embodiment, the lamination takes place at a juncture at which the melt strand has already cooled to give the transparent sheet to the extent that the surface temperature is below the glass transition temperature of the printed thermoplastic. In this variant directly prior to the lamination process the surface of the sheet comprising PMMA is heated by means of a radiant heater, of an IR source or of a blower to a temperature above the glass transition temperature of the printed thermoplastic before, as described, a roll, in particular a rubber roll, is used to press the printed reflector film onto the surface of the sheet.

In the second embodiment, at least one roll, preferably a rubber roll, is used to laminate the printed reflector film onto the transparent sheet directly after the polishing stack. In this case, the lamination unit is to be installed in the vicinity of the polishing stack in such a way that the surface of the transparent sheet has on the one hand undergone sufficient cooling and at the same time its temperature is still above the glass transition temperature or melting point of the adhesive layer.

The cooled laminate made of transparent sheet, print effect and reflector film can, after cooling, be cut to size or wound up onto a roll and can undergo further finishing processes. A further finishing process can by way of example comprise polishing of the edges or as already described equipping of the edges with a reflective coating material or with a reflective film or with an adhesive tape.

Such processes combine the advantages of low operating cost in the production of the structures by an in-line process, but without the disadvantages of high capital expenditure and high maintenance costs. In this process moreover a change of the structure is substantially easier to carry out, in fewer steps than in the case of structuring by way of rolls, since structure change can be carried out while the process of production of the laminate is running, for example simply by changing the reflector film. In particular, the roll-to-roll print onto a flexible film can be achieved very rapidly and at low cost by familiar film-printing methods.

A further aspect of the present invention provides a surface lighting device comprising the light guide plate as described above. The light guide panel is illuminated by at least one light source arranged on at least one edge of the light guide plate.

In the lighting device of the present invention, the ratio of the surface area of the transparent sheet occupied by the closed cavities i.e. not covered by the adhesive material to the area of the transparent sheet which is covered by the adhesive material generally decreases with the increasing distance from the light source. This arrangement ensures a substantially uniform light emission over the entire surface of the light guide plate.

Several examples of the patterns formed by the adhesive material are illustrated by Figures 2a-2f. For instance, the adhesive material may form two or more groups of parallel lines forming the lateral surfaces of the closed cavities and the thickness of the parallel lines gradually increases with the increasing distance from the light source (cf. Figures 2a-2c). Alternatively, the adhesive material may form two groups of parallel lines forming the lateral surfaces of the closed cavities and the distances between the parallel lines gradually decrease with the increasing distance from the light source (cf. Figures 2d-2f).

In yet further embodiments of the present invention, the pattern formed by the adhesive material may comprise three or more groups of parallel lines. In a further embodiment the pattern of the adhesive material may comprise a plurality of closed cavities having the shape of polygons such as triangles or hexagons.

Due to its excellent resistance to humidity, the light guide plate of the present invention can be advantageously used as a light source in areas having an increased air humidity and outdoor. In particular, the light guide plate is highly suitable for use as backlighting in LCD screens, backlighting in traffic signs, street lights, advertising panels, illumination means or in interior or exterior vehicle lighting.

## Claims

1. Light guide plate comprising a substantially opaque reflector film, an adhesive layer, which comprises an adhesive material, and a transparent sheet, wherein the transparent sheet and the reflector film are bonded together by the adhesive layer which is located between the transparent sheet and the reflector film and
the adhesive layer provides an optical connection between the transparent sheet and the reflector film,
the light guide plate being **characterised in that**
the adhesive layer forms a pattern comprising a plurality of closed cavities.

2. The light guide plate according to Claim 1, wherein the transparent sheet and the reflector film are substantially parallel to each other,
there is no direct contact between the transparent sheet and the reflector film,
the surface of the transparent sheet defines the plurality of lower surfaces of the closed cavities and
the surface of the reflector film defines the plurality of upper surfaces of the closed cavities and
the adhesive material separates the closed cavities from each other, thereby defining the lateral surfaces of the closed cavities.

3. The light guide plate according to Claim 1 or 2, wherein the reflector film is opaque or translucent.

4. The light guide plate according to any of Claims 1 to 3, wherein the adhesive material is a thermoplastic material having a glass transition temperature above 25°C and below the glass transition temperatures of the material of the transparent sheet and of the reflector film or a reactive adhesive with an activation temperature between 25°C and the glass transition temperature of the material of the transparent sheet and the material of the reflector film.

5. The light guide plate according to any of Claims 1 to 4, wherein the transparent sheet and the adhesive material are substantially colourless.

6. The light guide plate according to any of Claims 1 to 5, wherein the adhesive material comprises scattering particles.

7. The light guide plate according to any of Claims 1 to 6, wherein the adhesive material forms two or more groups of parallel lines forming the lateral surfaces of the closed cavities, wherein said two groups of parallel lines preferably intersect at right angles.

8. The light guide plate according to any of Claims 1 to 7, wherein the thickness of the adhesive layer is from 0.5 to 200 µm, preferably from 1 to 30 µm.

9. The light guide plate according to any of Claims 1 to 8, wherein the transparent sheet is composed of polycarbonate, of a cycloolefin copolymer, of polymethylmethacrylate or of a copolymer of polymethylmethacrylate and styrene.

10. The light guide plate according to any of Claims 1 to 9, wherein the reflector film comprises a film made of opaque white polyethylene terephtalate or comprises three-layer films with a semicrystalline middle layer made of polypropylene comprising particles and with two exterior layers made of cycloolefin copolymers.

11. Process for the production of light guide plates according to any of Claims 1 to 10, comprising the following steps (a)-(c):
(a) the transparent sheet is produced by extrusion with a polishing stack from a transparent material;
(b) the adhesive material is applied to the reflector film by structural printing; and
(c) the reflector film is laminated onto the transparent sheet, wherein a laminated sheet is obtained.

12. The process according to Claim 11, wherein
the adhesive material is a thermoplastic material having a glass transition temperature above 25°C and below the glass transition temperatures of the material of the transparent sheet and of the material of the reflector film;
directly prior to the step (c) the surface of the transparent sheet is heated by means of a radiant heater, of an IR source or of a blower to a temperature above the glass transition temperature of the adhesive material; and
the laminated sheet obtained in the step (c) is sawn into pieces, cut or is wound onto a roll.

13. Use of a light guide plate according to any of Claims 1 to 10 as a light source as backlighting in LCD screens, backlighting in traffic signs, street lights, advertising panels, illumination means or in interior or exterior vehicle lighting.

14. Surface lighting device comprising the light guide plate according to any of Claims 1 to 10, wherein the light guide panel is illuminated by a light source arranged on at least one edge of the light guide plate.

15. The surface lighting device according to Claim 14, wherein
the adhesive material forms two or more groups of parallel lines forming the lateral surfaces of the closed cavities and the thickness of the parallel lines gradually increases with the increasing distance from the light source or
wherein the adhesive material forms two groups of parallel lines forming the lateral surfaces of the closed cavities and the distances between the parallel lines gradually decrease with the increasing distance from the light source.
